(19) **Europäisches Patentamt**

**European Patent Office**

**Office européen des brevets**

(11) Numéro de publication : **0 272 192 B1**

(12) # FASCICULE DE BREVET EUROPEEN

(45) Date de publication du fascicule du brevet :
20.02.91 Bulletin 91/08

(51) Int. Cl.⁵ : **B60P 3/07**

(21) Numéro de dépôt : **87440075.7**

(22) Date de dépôt : **13.11.87**

(54) **Bras unitaire porteur pour le soutien d'un véhicule par ses roues.**

(30) Priorité : **18.11.86 FR 8616126**

(43) Date de publication de la demande :
**22.06.88 Bulletin 88/25**

(45) Mention de la délivrance du brevet :
**20.02.91 Bulletin 91/08**

(84) Etats contractants désignés :
**AT BE CH DE ES GB GR IT LI LU NL SE**

(56) Documents cités :
**EP-A- 0 184 969**
**DE-A- 3 113 707**
**GB-A- 844 710**

(73) Titulaire : **LOHR INDUSTRIE**
**29, rue du 14 Juillet**
**F-67980 Hangenbieten (FR)**

(72) Inventeur : **André, Jean-Luc**
**15 route du Vin**
**F-67310 Dangolsheim (FR)**
Inventeur : **Fity, Christian**
**14 Quai de l'Ill**
**F-67400 Illkirch Graffenstaden (FR)**

(74) Mandataire : **Metz, Paul**
**Cabinet METZ PATNI 95, rue de la Ganzau**
**F-67100 Strasbourg (FR)**

## Description

La présente invention se rapporte à un bras unitaire amovible porteur à utiliser par paire, transversalement en appui sur une structure rectiligne porteuse, pour le soutien d'un véhicule par ses roues, notamment sur des véhicules porte-voitures.

Le soutien des véhicules transportés sur un convoi porte-voitures par chacune de leurs roues a déjà été réalisé à l'aide de dispositifs comportant une paire de bras pivotants reliés entre eux par une structure coulissante déplaçable le long des poutres constituant la structure porteuse du véhicule porte-voitures, voir par example EP-A-0184969.

Ces dispositifs se composent d'une paire de bras pivotant chacun autour d'un axe vertical rendu mobile verticalement. Les axes verticaux sont portés par des pièces palières réunies mécaniquement entre elles par une barre d'accouplement emmanchée dans des extensions latérales en forme de douilles, l'ensemble constituant un chariot déplaçable le long des profilés porteurs définissant les plans de charge.

L'extrémité supérieure de chaque axe vertical est solidaire d'une poignée à extrémité libre recourbée vers le bas. La conformation de sous-face de cette poignée permet de réaliser un véritable blocage par accrochage sur la partie supérieure des profilés porteurs ou poutres des structures porteuses.

La largeur de l'extrémité recourbée est suffisante pour que le contact d'appui améliore l'accrochage par un coincement supplémentaire afin d'offrir une immobilisation suffisante. Ce coincement devient plus efficace par la poussée de la roue sur l'un ou l'autre des bras sous l'effet d'efforts de translation le long de l'axe du véhicule.

Ces caractéristiques ne procurent toutefois pas toute la facilité d'emploi souhaitable et tous les avantages que l'on peut attendre de telles structures de soutien.

Ainsi, si ces structures sont mobiles le long des profilés porteurs, elles ne permettent pas le déplacement individuel de chaque bras pivotant.

Par ailleurs, les bras assujettis mécaniquement entre eux ne sont nullement amovibles et l'ensemble doit être considéré comme faisant partie intégrante du véhicule car sa récupération nécessite une opération de démontage.

De plus, le coulissement de l'ensemble chariot et bras s'avère moins aisé que prévu en raison de son poids.

Finalement, ces structures constituent des sources de bruit au roulage à vide en position escamotée.

La présente invention a pour but de remédier à ces divers inconvénients.

A cet effet, elle se rapporte à un bras de soutien destiné à supporter un véhicule par ses roues par appui sur une structure porteuse linéaire, caractérisée en ce qu'il se compose d'un élément rectiligne horizontal porteur prolongé verticalement vers le haut à partir de son talon formant pièce d'angle par une structure d'accrochage venant prendre séparément ou simultanément appui simple ou de blocage en position longitudinale et horizontale sur le chant latéral adjacent et sur la face supérieure du profilé porteur ou sur des structures d'accrochage ou d'appui rapportées sur celui-ci et en ce que la face arrière du talon porte sur le chant adjacent.

Le bras amovible de soutien selon l'invention présente des avantages déterminants :
 – indépendance totale des bras entre eux ;
 – légèreté suffisante pour une manipulation aisée ;
 – mise en place immédiate au bon endroit ;
 – calage offrant toutes les garanties de sécurité ;
 – caractère amovible intégral permettant d'enlever le bras sans démontage ;
 – simplicité et rapidité de pose et de dépose ;
 – grande efficacité de blocage.
 – manipulation réduite : pas de chariot à déplacer
 – écartement entre les bras réglable à volonté.

Les caractéristiques de l'invention et d'autres avantages sont consignés dans la description qui suit, effectuée à titre d'exemple non limitatif, sur une variante d'exécution en référence aux dessins accompagnants dans lesquels :

• La figure 1 est une vue en perspective de l'élément unitaire de soutien en position d'accrochage selon la variante de base ;

• la figure 2 est une vue en perspective d'une paire d'éléments unitaires de soutien selon la variante de base disposés rapprochés en position de soutien d'une roue ;

• la figure 3 est une vue en plan représentant une paire d'éléments unitaires de soutien selon la variante de base disposés rapprochés en position de soutien d'une roue ;

• la figure 4 est une vue de profil de la même variante longeron support et ratelier représentés en coupe transversale ;

• la figure 5 est une vue schématique double, en perspective, d'un mode de réalisation du ratelier avant pliage et après montage sur la structure rectiligne porteuse ;

• la figure 6 est une vue schématique double, en perspective, d'un deuxième mode de réalisation du ratelier avant scission longitudinale et après montage sur la structure rectiligne porteuse ;

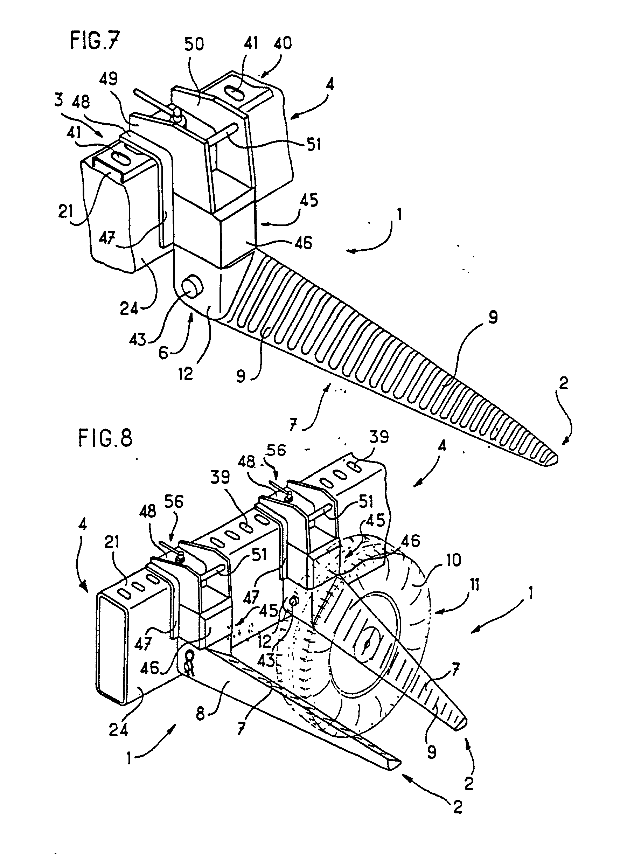

• la figure 7 est une vue en perspective d'un élément unitaire de soutien en position d'accrochage selon une deuxième variante ;

• la figure 8 est une vue en perspective d'une paire d'éléments unitaires de soutien selon une deuxième variante de base disposés rapprochés en position de soutien d'une roue ;

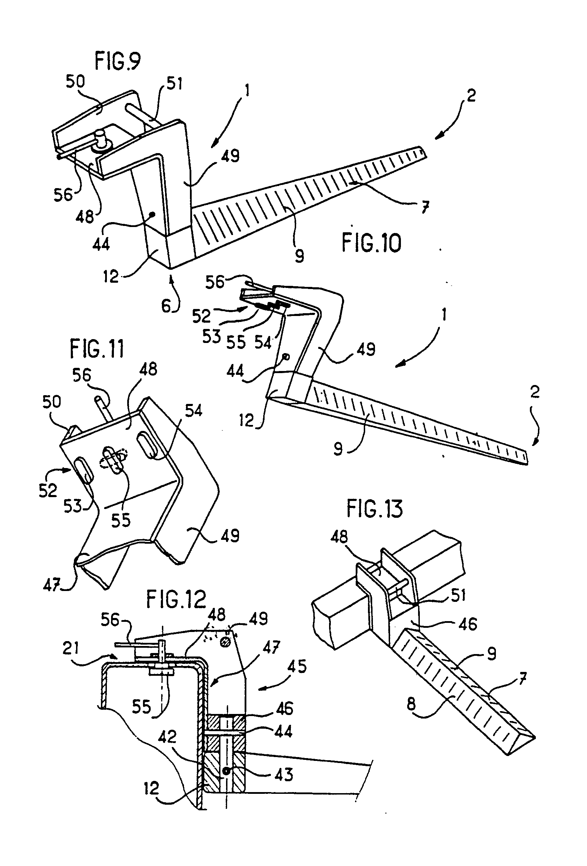

• la figure 9 est une vue en perspective d'ensemble, côté extrémité supérieure, montrant la manette de verrouillage de la deuxième variante ;

• la figure 10 est une vue en perspective d'ensemble de la deuxième variante, côté structures d'accrochage et de verrouillage de sous-face ;

• la figure 11 est une vue en perspective de détail des structures d'accrochage et de verrouillage de sous-face conformes à la deuxième variante ;

• la figure 12 est une vue en coupe longitudinale médiane du bras de soutien selon l'invention conforme à la deuxième variante ;

• la figure 13 est une vue en perspective d'une variante présentant deux versants égaux de l'élément rectiligne porteur du bras de soutien selon l'invention;

• la figure 14 est une vue en perspective d'une variante monobloc à accrochage du type crochet ;

• la figure 15 est une vue en coupe longitudinal de la variante représentée sur la figure 14 accrochée sur un profilé porteur.

On décrira ci-après plusieurs modes de réalisation, concernant les moyens utilisés.

De façon générale, le bras unitaire de soutien 1 selon l'invention se compose d'un élément rectiligne horizontal porteur 2 prolongé verticalement vers le haut par une structure d'accrochage 3 pour son montage amovible sur un support rectiligne porteur constitué par exemple par un profilé porteur 4, poutre métallique ou autre comportant soit un profilé d'accrochage et de verrouillage sur son chant supérieur, soit un profilé latéral d'appui et d'indexage 5 sur le chant adjacent de ladite poutre.

L'élément rectiligne porteur 2 se raccorde à la structure d'accrochage 3 par une pièce d'angle 6. Il affecte de préférence une forme générale prismatique à deux versants 7 et 8 présentant chacun, ou l'un ou l'autre, un relief approprié, par exemple une série de stries ou de nervures inclinées telles que 9, pour le renforcement mécanique et l'immobilisation latérale du pneu 10 de la roue 11 à soutenir.

Dans les versions représentées, les versants 7 et 8 présentent des configurations différentes depuis un grand versant oblique à nervures avec un versant adjacent vertical et lisse, jusqu'à une configuration en deux versants identiques, également striés et de même surface, de manière à servir indifféremment de pièce droite ou gauche, dans le cas habituel d'utilisation par paire.

Pour des raisons de commodité, la majorité des variantes représentées sont avec un versant incliné 7 et un versant vertical 8 lisse.

On décrira tout d'abord ci-après la version de base représentée sur les figures de 1 à 6.

Selon cette variante, l'élément rectiligne porteur 2, comporte à son extrémité côté support rectiligne porteur 4, un talon 12 dont la face arrière 13 est appelée à venir buter contre le chant adjacent dudit support rectiligne porteur 4. Ce talon est prolongé vers le haut par une liaison mécanique, par exemple un axe 14 le traversant et immobilisé sur celui-ci par exemple par une goupille transversale 15.

L'axe 14 porte une pièce terminale d'accrochage 16 de forme générale en crochet emmanchée à l'extrémité de celui-ci par sa tête 17 assurant la liaison d'angle et immobilisée par exemple par une goupille transversale 18.

La pièce d'accrochage 16 se compose essentiellement d'un fer plat 19, à extrémité coudée 20 vers le bas destiné à venir s'accrocher sur la partie supérieure du support rectiligne porteur 4, position dans laquelle la sous-face du fer plat 19 est en contact d'appui avec la face supérieure 21 du support rectiligne porteur 4, la face interne 22 de l'extrémité coudée 20 avec le chant latéral 23 et la face arrière 13 du talon 12 avec le chant latéral d'appui 24.

Un profilé d'appui dit ratelier 25 est rapporté par exemple par soudage sur le chant latéral d'appui 24 pour remplir la fonction d'indexage, c'est-à-dire l'immobilisation dans des positions déterminées se succédant le long du profilé porteur 4.

Il présente une suite linéaire de logements transversaux tels que 26, par exemple semi-cylindriques, ou tout autre forme de cavités transversales réceptrices ou des évidements 27 et 28 en correspondance parallèle entre eux et transversaux à la direction générale du profilé porteur 4 destinés à recevoir en léger appui l'axe 14 de chaque bras de soutien.

Les logements ou cavités réceptrices sont disposés selon une suite linéaire à intervalles réguliers pour remplir la fonction d'indexage.

On citera ci-après, à titre illustratif, divers exemples de réalisation de ces profilés ou structures d'appui.

Tout d'abord, les profilés d'appui peuvent être réalisés par emboutissage dans un profilé en tôle.

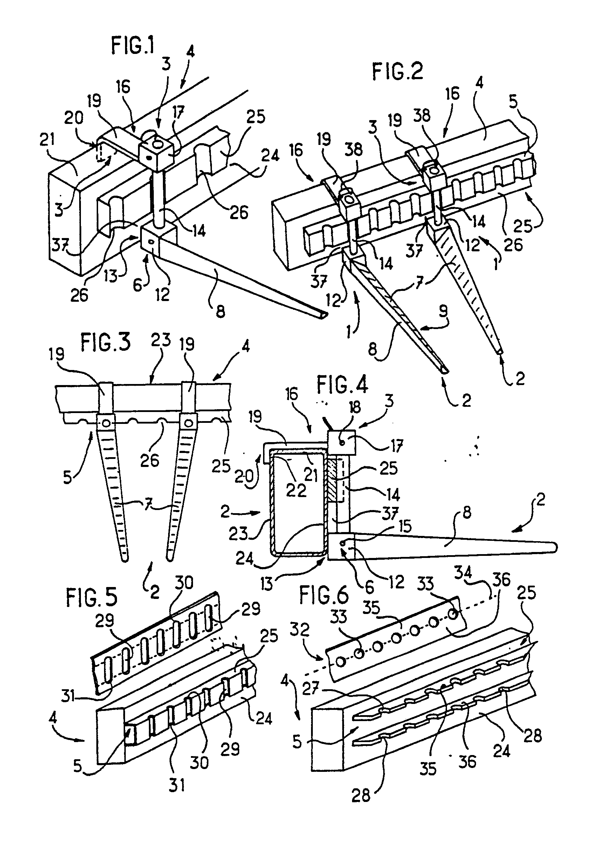

Deux autres modes s'avèrent intéressants. Des représentations schématiques sur les figures 5 et 6 on constate qu'un premier type de profilé d'appui est élaboré à partir d'une tôle perforée d'ouvertures transversales allongées telles que 29, terminées par des extrémités arrondies 30 et 31. Le pliage des bords de cette tôle s'effectue selon des lignes perpendiculaires aux ouvertures passant au travers de ces ouvertures, au voisinage des extrémités arrondies, 30 et 31 de manière à constituer, après pliage à angle droit, un profilé de section générale transversale en U sur lequel les ouvertures 29 forment des encoches dans lesquelles l'axe 14 peut pénétrer, jusqu'à buter contre les bords des extrémités arrondies 30 et 31.

Cette butée n'est en réalité pas forcément utilisée car la pièce d'accrochage arrive normalement en contact avec le chant latéral adjacent 24 par la face arrière 13 du talon 12 avant le contact de l'axe avec le fond de gorge ou avec ses extrémités longitudinales.

Les logements 26 ou évidements 27 et 28 jouent simplement un rôle d'indexation en position.

Une autre forme de réalisation de ces logements est représentée sur la figure 6. Il s'agit d'une variante à évidements hauts 27 et bas 28.

Dans ce cas, la fonction d'indexage est remplie par la formation d'évidements ouverts tels que hauts 27 et bas 28 en correspondance transversale qui constituent à chaque fois deux logements ponctuels, mais suffisants, d'appui et de calage pour l'axe 14.

Ce type de ratelier peut être obtenu de la façon représentée sur la figure 6, c'est-à-dire à partir d'une bande de tôle 32 perforée par une succession linéaire d'ouvertures 33 par exemple circulaires, centrées sur la ligne médiane 34. La bande de tôle est ensuite découpée selon cette ligne médiane 34 et les deux demi parties 35 et 36 ainsi individualisées sont solidarisées par leur chant continu sur une des faces latérales du profilé porteur 4 en disposition parallèle, entre elles et aux faces du profilé porteur, chaque évidement se faisant face en correspondance transversale.

La fonction d'indexage peut également être remplie par un simple profilé du commerce par exemple de la tôle nervurée, ondulée ou toute autre forme d'onde appropriée qui pourra jouer le rôle d'arrêt et de guide.

L'intervalle référencé 37 entre le bord inférieur du profilé d'indexage et le talon 12 sera, bien entendu, supérieur à la hauteur de l'extrémité recourbée, de manière à présenter un jeu suffisant pour permettre la mise en place par engagement transversal direct du bras unitaire de soutien et sa dépose, sans aucun effort de basculement.

Pour faciliter les manoeuvres de pose et de dépose, un anneau de préhension 38 est monté par exemple pivotant sur la tête 17 de la pièce d'accrochage 16.

On pourra prévoir également dans cette variante un verrouillage par exemple à encliquetage ou autre moyen de maintien pour que le bras de soutien ne saute pas à vide, c'est-à-dire non chargé.

Par ailleurs, cette variante pourra présenter une version monobloc.

Les différents efforts auxquels peut être soumis le bras unitaire selon l'invention sont les suivants :

• efforts correspondant à la charge se décomposant sur la surface d'appui de l'élément porteur en un effort vertical et un effort longitudinal,

• efforts horizontaux, longitudinaux et latéraux provenant de forces dynamiques : freinage, accélération, force centrifuge en virage.

Ces différents efforts sont supportés de la façon suivante par le bras unitaire selon l'invention.

La réaction à l'effort global vertical est fournie par l'appui du fer plat 19 contre la face supérieure 21 du support rectiligne porteur 4. La réaction à l'effort global longitudinal horizontal est apportée par l'appui de l'axe 14 sur le ratelier 25.

Les efforts dynamiques pouvant se décomposer en efforts verticaux et en efforts horizontaux sont repris de la même manière que ci-dessus.

Les couples mécaniques correspondant à la totalité des efforts ci-dessus sont supportés de la façon suivante.

La composante dans un plan horizontal du couple mécanique est neutralisée par le coincement en rotation apporté par le contact de l'extrémité courbée 20 avec le chant latéral 23 et le guidage et l'immobilisation de l'axe 14 par le ratelier 25.

La composante dans un plan vertical du couple mécanique est neutralisée par l'appui de la face arrière 13 du talon 12 contre le chant latéral d'appui 24.

On constate que dans cette configuration et selon les particularités de cette variante, le bras unitaire selon l'invention s'avère parfaitement et rapidement amovible, de pose immédiate au bon endroit avec calage efficace et automatique.

On décrira maintenant plusieurs autres variantes en référence aux figures suivantes de 7 à 15.

Ces variantes présentent la même configuration générale que la variante de base à savoir un élément rectiligne porteur 2 à deux versants 7 et 8 égaux ou non, élément terminé par un talon 12 à face arrière plane 13, l'ensemble se poursuivant vers le haut par une structure d'accrochage 3 pour son montage amovible sur le support rectiligne porteur 4. Celui-ci comporte une série de structures réceptrices par exemple pratiquées dans son chant supérieur 21 sous la forme d'ouvertures 39 disposées selon une suite linéaire, ou sous la forme d'un profilé d'accrochage et de verrouillage 40 rapporté sur le chant supérieur 21. Ledit profilé d'accrochage et de verrouillage 40 est traversé par une série d'ouvertures analogues 41 pratiquées à intervalles réguliers pour déterminer le pas d'indexation c'est-à-dire l'intervalle minimal existant entre deux positions rapprochées.

Le talon 13 joue le rôle de bloc de raccordement relié par exemple par un axe non apparent 42 à la structure d'accrochage 3, axe immobilisé en rotation par deux goupilles croisées 43 et 44.

La structure d'accrochage 3 est formée par une équerre 45 constituée d'une base de raccordement 46 avec l'élément rectiligne porteur 2, d'une semelle d'appui 47 coudée à angle droit pour épouser le chant adjacent 24 et la face supérieure 21 du support rectiligne 4 et d'une partie supérieure en forme de platine horizontal d'accrochage 48 constituant le retour de la semelle 47. Celle-ci est bordée de deux ailes parallèles 49 et 50 coudées solidarisées perpendiculairement au plan de la semelle 47 et reliées entre elles au niveau de la zone coudée par une tige de préhension 51.

L'équerre 45 se termine vers le haut par la platine horizontale d'accrochage 48 qui présente en sousface des moyens d'accrochage 52 venant coopérer avec les ouvertures 39 ou 41 en vue du maintien puis du verrouillage.

Les moyens d'accrochage et de verrouillage 52 sont réalisés par exemple par une série de plots de forme adaptée à celle des ouvertures 39 ou 41. On distingue ainsi deux plots oblongs fixes 53 et 54 séparés par un plot central pivotant 55 commandé en mouvements par une manette de verrouillage 56 entre une position déverrouillée parallèle aux plots fixes et une position verrouillée perpendiculaire à ceux-ci. Les plots oblongs 53, 54 et 55 traversent les ouvertures 41 et calent longitudinalement l'ensemble. Le plot central 55 assure le verrouillage par blocage de la sous face de la platine 48, soit contre la partie supérieure du profilé d'accrochage et de verrouillage 40, soit contre la face supérieure 21 du support rectiligne porteur 4.

En effet, le corps des plots oblongs 53, 54 et 55 présente une face arrière plane en retrait délimitant avec la sous-face de la platine 48 un intervalle légèrement supérieur à l'épaisseur du profilé d'accrochage et de verrouillage 40 permettant ainsi d'assurer un blocage par encastrement ou pincement.

Les bras unitaires de soutien selon l'invention peuvent être monobloc, mais aussi en deux pièces distinctes reliées par l'axe 42 assurant la liaison entre l'élément rectiligne porteur 2 et l'équerre d'appui 45.

L'utilisation du bras de soutien selon l'invention s'effectue normalement par paire.

Chaque bras est amené présenté perpendiculairement au profilé porteur 4 puis mis en place par appui de sa semelle en équerre, contre les chants correspondants et engagement simultané des plots 53, 54 et 55 dans les ouvertures 39 ou 41 correspondantes et blocage par action sur la manette 56 commandant les structures de verrouillage.

L'écartement entre les bras est choisi en fonction du type de véhicule à soutenir.

Il est modifiable à tout moment par simple décrochage et remise en place d'un des bras.

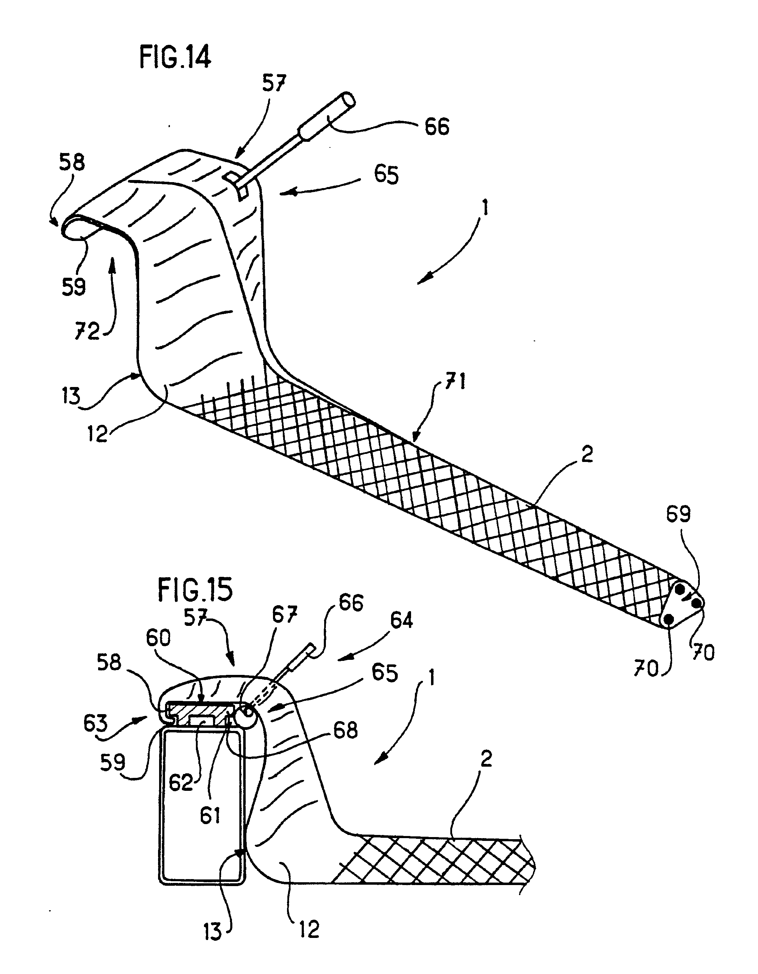

Selon un autre mode de réalisation, le bras porteur selon l'invention est réalisé d'une seule pièce (figures 14 et 15) présentant une extrémité d'accrochage 57 en équerre terminée par un rebord recourbé 58 à angle droit pourvu d'un retour 59 formant crochet apte à venir s'accrocher sur un profilé d'accrochage 60 par exemple formé d'une platine 61 reliée à la face supérieure du profilé porteur par une base 62 en retrait, permettant de ménager un bord surélevé 63 sur lequel vient s'accrocher le rebord recourbé 58.

Le bras porteur pourra être bloqué longitudinalement sur le profilé en un endroit quelconque par exemple par un verrou de coincement 64, formé par exemple d'un dispositif 65 à excentrique commandé par un levier 66 dont le galet 67 agit par coincement sur le rebord opposé 68 du profilé d'accrochage.

L'avantage important de ce mode de réalisation concerne la possibilité de fabrication par moulage en une seule pièce ou par confection et habillage d'une âme 69 formée de trois armatures métalliques telles que 70 disposées selon les arêtes d'un volume prismatique de soutien 71 conformé d'une seule pièce en bras complet de soutien, par réalisation simultanée de l'élément rectiligne porteur 2, de l'équerre puis de la forme d'accrochage 72 à son extrémité arrière.

La reprise des efforts verticaux et horizontaux ainsi que les couples correspondants s'effectuent de façon analogue à celle déjà indiquée pour la variante de base.

Bien entendu, la deuxième variante décrite ci-dessus peut affecter une forme générale analogue à accrocher dans laquelle l'extrémité d'accrochage en équerre est terminée par un rebord recourbé, et possède un retour destiné à la prise d'accrochage avec blocage sur un profilé d'accrochage rapporté sur le profilé porteur 4.

Une autre variante perfectionnée consiste à rendre mobile au moins un des éléments de manière à permettre le déplacement de la charge, voiture ou autre, par rapport au châssis du véhicule porteur. Cette possibilité confère l'avantage important de pouvoir ajuster la position de la voiture dans le chargement après mise en place et levage de ladite voiture. Pour ce faire, on prévoit de rendre mobile le profilé d'appui (25) et de permettre le coulissement corrélatif de la pièce terminale d'accrochage 16.

On peut également envisager le déplacement global du profilé porteur 4 par rapport au châssis du véhicule porteur.

**Revendications**

1. Bras unitaire transversal porteur et amovible à utiliser par paire en appui de blocage sur une structure longitudinale rectiligne porteuse, profilé porteur (4), poutre ou autre, pour le soutien d'un véhicule par ses roues, notamment sur véhicules porte-voitures, caractérisé en ce qu'il comprend un élément rectiligne horizontal porteur (2) prolongé verticalement vers le haut à partir de son talon (12) formant pièce d'angle (6) par une structure d'accrochage (3) venant prendre séparément ou simultanément appui simple ou de blocage en position longitudinale et horizontale sur le chant latéral adjacent (24) et sur la face supérieure (21) du profilé porteur (4) ou sur des structures d'accrochage ou d'appui rapportées sur ledit profilé porteur (4) et en ce que la face arrière (13) du talon (12) porte sur le chant adjacent (24).

2. Bras selon la revendication 1, caractérisé en ce que la structure d'accrochage (3) prend appui simultanément sur le chant latéral adjacent (24) et sur la face supérieure (21) et sur le chant latéral opposé (23) du profilé porteur.

3. Bras selon les revendications 1 et 2, caractérisé en ce que l'élément rectiligne porteur (2) se prolonge vers le haut par une liaison mécanique par exemple un axe (14) jusqu'à une pièce terminale d'accrochage (16) de forme générale en crochet, pièce se composant d'une tête (17) assurant la liaison d'angle avec l'axe vertical (14), d'un fer plat (19) transversal au profilé porteur (4) assurant l'appui sur la face supérieure (21) du profilé porteur (4) et d'une extrémité coudée (20) vers le bas terminant l'accrochage par contact de blocage de la face interne (22) de ladite extrémité coudée (20) avec le chant latéral (23) opposé du profilé porteur.

4. Bras selon les revendications 1, 2 et 3 caractérisé en ce que le chant latéral (24) du profilé porteur (4) possède, fixé ou solidarisé à sa surface, un profilé d'appui (25) dit ratelier présentant une suite linéaire de logements transversaux (26) ou évidements (27) et (28) pour la prise d'appui de blocage.

5. Bras selon la revendication 4 caractérisé en ce que les logements transversaux (26) du ratelier (25) sont des ouvertures transversales allongées (29) terminées par des extrémités arrondies (30) et (31) pratiquées dans une tôle selon une suite linéaire, tôle ultérieurement pliée selon deux lignes de pliage perpendiculaires aux ouvertures passant au travers desdites ouvertures (29) au voisinage des extrémités (30) et (31) de manière à constituer après pliage à angle droit un profilé de section en U sur lequel les ouvertures (29) forment des encoches dans lesquelles l'axe (14) peut pénétrer.

6. Bras selon la revendication 4 caractérisé en ce que les logements (26) sont des évidements ouverts hauts (27) et bas (28) en correspondance transversale résultant de la solidarisation en disposition parallèle sur le chant latéral (24) du profilé porteur (4) de deux demi-parties (35) et (36) d'une tôle perforée par une succession linéaire d'ouvertures (33) centrées sur la ligne médiane (34) et découpée selon la ligne médiane (34).

7. Bras selon la revendication 1 caractérisé en ce que la structure d'accrochage (3) prend appui sur le chant latéral adjacent (24) et vient s'accrocher et se verrouiller sur la surface supérieure à des endroits prédéterminés, espacés d'intervalles réguliers déterminant le pas d'indexation par des moyens d'accrochage et de verrouillage (52) conjugués à des structures réceptrices sous la forme d'ouvertures (39) pratiquées dans la face supérieure (21) du profilé porteur (4) ou dans un profilé d'accrochage et de verrouillage (40) rapporté sur celle-ci.

8. Bras selon la revendication 7 caractérisé en ce que la structure d'accrochage (3) est formée par une équerre (45) constituée d'une base de raccordement (46), d'une semelle d'appui (47) coudée à angle droit pour épouser le chant adjacent (24) et la face supérieure (21) du profilé rectiligne (4), semelle d'appui (47) terminée par une platine horizontale d'accrochage (48) présentant en sous face des moyens d'accrochage (52) et en ce que les moyens d'accrochage (52) sont des plots fixes (53) et (54) séparés par un plot central (55) pivotant, coopérant avec les ouvertures adaptées (39) des structures réceptrices.

9. Bras selon la revendication 1 caractérisé en ce que la structure d'accrochage (3) prend appui sur le chant latéral adjacent (24) et vient s'accrocher et se verrouiller sur la surface adjacente à des endroits quelconques.

10. Bras selon la revendication 9 caractérisé en ce que la structure d'accrochage (3) est une pièce d'extrémité (57) conformée en équerre d'un seul tenant avec l'élément rectiligne porteur (2), pièce terminée par un rebord (58) recourbé à angle droit pourvu d'un retour (59) formant crochet apte à venir s'accrocher sur un profilé d'accrochage (60), ledit profilé d'accrochage étant formé d'une platine (61) reliée à la face supérieure du profilé porteur (4) par une base (62) en retrait ménageant un bord surélevé (63) sur lequel vient s'accrocher le rebord recourbé (58) et en ce que le bras est bloqué longitudinalement par un verrou de coincement (64) formé, par exemple, d'un dispositif (65) à excentrique.

11. Bras unitaire selon les revendications 1 et 4 caractérisé en ce que le profilé porteur (4) ou le profilé d'appui (25) sont mobiles par rapport au châssis du véhicule porteur afin de permettre le déplacement de la charge, voiture ou autre, en vue d'un ajustement de position dans le chargement.

**Ansprüche**

1. Einheitlicher querliegender und beweglicher Tragarm zur paarweisen Verwendung in Art eines Sperrriegels auf einer geradlinigen tragenden Längskonstruktion, in Form eines Profilträgers (4), als Balken oder in anderer Form, zum Abstützen eines Fahrzeuges an seinen Rädern, insbesondere auf Autotransportfahrzeugen, **dadurchgekennzeichnet,** daß er ein geradliniges horizontales Tragelement (2) aufweist, das von seinem, ein Winkelstück (6) bildendes Ende (12) aus durch eine Einhängevorrichtung (3) vertikal nach oben verlängert ist, wobei sich letztere getrennt oder gleichzeitig, einfach oder gesperrt, horizontal und der Länge nach an der benachbarten Seitenwand (24) und auf der Oberseite (21) des Profilträgers (4) abstützt oder auf Einhänge- oder Abstützstrukturen, die an dem Profilträger (4) angesetzt sind, und daß die Rückseite (13) des Endstückes (12) an der benachbarten Seitenwand (24) aufsitzt.

2. Tragarm nach Anspruch 1, **dadurch gekennzeichnet,** daß sich die Einhängevorrichtung (3) gleichzeitig auf der benachbarten Seitenwand (24), auf der Oberseite (21) und an der gegenüberliegenden Seitenwand (23) des Profilträgers abstützt.

3. Tragarm nach den Ansprüchen 1 und 2, **dadurch gekennzeichnet,** daß das geradlinige Tragelement (2) sich nach oben über eine mechanische Verbindung, z.B. einen Bolzen (14), bis zu einen Anhängeschlußstück (16), in der allgemeinen Form eines Hakens verlängert, einem Teil, bestehend aus einem Kopf (17), der die Winkelverbindung mit dem vertikalen Bolzen (14) darstellt, einem quer zum Profilträger (4) liegenden Flacheisen (19), welches das Abstützen auf der Oberseite (21) des Profilträgers (4) ermöglicht, und einem nach unten gebogenen Ende (20), welches das Einhängen durch Stoppkontakt der Innenseite (22) dieses gebogenen Endes (20) mit der gegenüberliegenden Seitenwand (23) des Profilträgers beendet.

4. Tragarm nach den Ansprüchen 1, 2 und 3, **dadurch gekennzeichnet**, daß die Seitenwand (24) des Profilträgers (4) ein Abstützprofil (25), auch Rastenleiste genannt, aufweist, das an ihrer Oberfläche befestigt oder anderweitig mit ihr verbunden ist, und das eine geradlinige Folge von querliegenden Vertiefungen (26) oder Aussparungen (27, 28) zum Einrasten der Verriegelung trägt.

5. Tragarm nach Anspruch 4, **dadurch gekennzeichnet**, daß die querliegenden Vertiefungen (26) der Rastenleiste (25) längliche querliegende in geradliniger Folge in einem Blech angebrachte Öffnungen (29) mit abgerundeten Enden (30, 31) sind, wobei man das Blech später entlang von zwei Biegelinien biegt, die senkrecht zu den Öffnungen liegen, und die diese Öffnungen (29) in der Nähe der Enden (30, 31) so schneiden, daß es nach dem Biegen im rechten Winkel ein Profil mit U-Querschnitt bildet, an welchem die Öffnungen (29) Einschnitte bilden, in welche der Bolzen (14) eingreifen kann.

6. Tragarm nach Anspruch 4, **dadurch gekennzeichnet**, daß die Vertiefungen (26) obere (27) und untere (28) sich in Querrichtung deckende offene Aussparungen sind, die entstehen, wenn man an der Seitenwand (24) des Profilträgers (4) in paralleler Anordnung die zwei Hälften (35, 36) eines Bleches befestigt, das mit einer geradlinigen Folge von auf der Mittellinie (34) ausgerichteten Öffnungen (33) perforiert und entlang der Mittellinie (34) auseinandergeschnitten ist.

7. Tragarm nach Anspruch 1, **dadurch gekennzeichnet**, daß sich die Einhängevorrichtung (3) an der benachbarten Seitenwand (24) abstützt und sich auf der Oberseite an festgelegten, in gleichmäßigen Abständen befindlichen, den Positionsschritt bestimmenden Stellen durch Einhänge- und Verriegelungseinrichtungen (52) einhängt und verriegelt, wobei letztere bestimmten Aufnahmestrukturen in Form von Öffnungen (39) zugeordnet sind, die in der Oberseite (21) des Trägerprofils (4) oder in ein auf letzterem angebrachten Profil zum Einhängen und Verriegeln (40) eingearbeitet sind.

8. Tragarm nach Anspruch 7, **dadurch gekennzeichnet**, daß die Einhängevorrichtungen (3) ein Winkelstück (45) darstellt, bestehend aus einem Anschluß-Unterteil (46), einer Abstützplatte (47), die zur Anpassung an die benachbarte Wand (24) und die Oberseite (21) des geraden Trägers (4) rechtwinklig gebogen ist, wobei diese Abstützplatte (47) mit einer horizontalen Einhängeplatte (48) abschließt, die auf der Unterseite Einhängevorrichtungen (52) aufweist, und daß die Einhängeeinrichtungen (52) aus Klötzchen bestehen, die mit den passenden Öffnungen (39) der Aufnahmekonstruktion zusammenarbeiten, und zwar aus zwei festen Klötzchen (53, 54), getrennt voneinander durch ein zentrales drehbares Klötzchen (55).

9. Tragarm nach Anspruch 1, **dadurch gekennzeichnet**, daß sich die Einhängevorrichtung (3) an der benachbarten Seitenwand (24) abstützt und sich auf der benachbarten Oberseite an beliebigen Stellen einhängt und verriegelt.

10. Tragarm nach Anspruch 9, **dadurch gekennzeichnet**, daß die Einhängevorrichtung (3) ein mit dem geraden Tragelement (2) in einem Stück in Winkelform ausgebildetes Endstück (57) ist, wobei letzteres mit einem rechtwinklig umgebogenen Rand (58) abschließt, der seinerseits mit einer Umkantung (59) versehen ist, wodurch sich ein Haken bildet, der sich zum Einhängen in ein Einhängeprofil (60) eignet, welches aus einer, an der Oberseite des Profilträgers (4) angebrachten, mit einer zurückgenommenen Unterseite (62) versehenen Platte (61) besteht, wodurch ein hochstehender Rand (63) entsteht, an welchem sich der umgebogene Rand (58) einhängt, und daß man den Tragarm in Längsrichtung durch einen Klemmriegel (64) z.B. mit einer exzentrischen Vorrichtung (65) blockiert.

11. Einheitlicher Tragarm nach den Ansprüchen 1 und 4, **dadurch gekennzeichnet**, daß der Profilträger (4) oder das Abstützprofil (25) bezüglich des Fahrgestelles des Transportfahrzeuges beweglich ist, um die Verschiebung der Ladung, sei es ein Wagen oder etwas anderes, hinsichtlich einer Positionskorrektur beim Beladen zu ermöglichen.

## Claims

1. Transverse and movable unitary supporting arm to be used in pairs by abutting in a locking manner against a longitudinal rectilinear supporting structure, supporting section (4), beam or the like, for supporting a vehicle by means of its wheels, in particular on vehicle transporters, characterized in that it comprises a horizontal rectilinear supporting member (2) which extends upwards in a vertical manner from the block (12) thereof forming a corner piece (6) by means of a fastening structure (3) which abuts separately or simultaneously in a simple or locking manner in a longitudinal and horizontal position against the adjacent lateral edge (24) and against the upper side (21) of the supporting section (4) or against fastening or support structures which are mounted on the said supporting section (4) and in that the rear side (13) of the block (12) is supported by the adjacent edge (24).

2. Arm according to claim 1, characterized in that the fastening structure (3) simultaneously abuts against the adjacent lateral edge (24) and against the upper side (21) and against the opposite lateral edge (23) of the supporting section.

3. Arm according to claims 1 and 2, characterized in that the rectilinear supporting member (2) extends upwards by means of a mechanical link, for example a shaft (14) as far as a fastening end piece (16) which is generally hook-shaped, which piece comprises a head (17) which operates the corner link with the vertical shaft (14) and a flat iron (19) which is transverse to the supporting section (4) which ensures the support on the upper side (21) of the supporting section (4) and of a downward curved end (20) which terminates the fastening by means of locking contact of the internal side (22) of the said curved end (20) with the opposite lateral side (23) of the supporting section.

4. Arm according to claims 1, 2 and 3, characterized in that the lateral edge (24) of the supporting section (4) has fixed to or integral with the surface thereof, a support section (25) known as a frame having a linear series of transverse housings (26) or recesses (27) and (28) for locking support engagement.

5. Arm according to claim 4, characterized in that the transverse housings (26) of the frame (25) are elongated transverse apertures (29) which terminate in rounded ends (30) and (31) which are disposed in a sheet according to a linear series, which sheet is subsequently folded according to two folding lines which are perpendicular to the apertures passing through the said apertures (29) in the vicinity of the ends (30) and (31) so as to constitute after folding at a right angle a U-shaped profile on which the apertures (29) form slots into which the shaft (14) may penetrate.

6. Arm according to claim 4, characterized in that the housings (26) are open upper (27) and lower (28) recesses connected in a transverse manner resulting from the rendering integral in parallel arrangement on the lateral edge (24) of the supporting section (4) of two half parts (35) and (36) of a sheet which is perforated with a linear succession of apertures (33) which are placed on the median line (34) and cut according to the median line (34).

7. Arm according to claim 1, characterized in that the fastening structure (3) abuts against the adjacent lateral edge (24) and fastens and locks on the upper surface at preselected places, spaced at regular intervals which determine the indexing pitch via fastening and locking means (52) which are connected to receiving structures in the form of apertures (39) which are disposed in the upper side (21) of the supporting section (4) or in a fastening and locking section (40) which is disposed thereon.

8. Arm according to claim 7, characterized in that the fastening structure (3) is formed by a bracket (45) which comprises a connecting base (46), a base support (47) which is curved at a right angle in order to fit the adjacent edge (24) and the upper side (21) of the rectilinear section (4), which support base (47) terminates in a horizontal fastening plate (48) which has on the lower side fastening means (52) and in that the fastening means (52) are fixed lugs (53) and (54) which are separated by a pivoting central lug (55) which cooperates with the adapted apertures (39) of the receiving structures.

9. Arm according to claim 1, characterized in that the fastening structure abuts against the adjacent lateral edge (24) and fastens and locks on the surface adjacent to any of these places.

10. Arm according to claim 9, characterized in that the fastening structure (3) is an end piece (57) which is square-shaped all in one part with the rectilinear supporting member (2), which part terminates in a shoulder (58) which is curved at a right angle and provided with a return (59) which forms a hook which is suitable for fastening on a fastening section (60), the said fastening section being formed by a plate (61) which is connected to the upper side of the supporting section (4) by means of an recessed base (62) which provides a raised edge (63) onto which the curved shoulder (58) fastens and in that the arm is blocked longidudinally by a clamping bolt (64) formed, for example, by an eccentric device (65).

11. Unitary arm according to claims 1 and 4, characterized in that the supporting section (4) or the support section (25) are movable with respect to the chassis of the supporting vehicle in order to enable the load, car or the like, to be moved with a view to adjusting the position of the load.

FIG.1

FIG.2

FIG.3

FIG.4

FIG.5

FIG.6

FIG.7

FIG.8

FIG.9

FIG.10

FIG.11

FIG.13

FIG.12

FIG.14

FIG.15